# EUROPÄISCHE PATENTSCHRIFT

(11) **EP 1 309 782 B1**
(45) Veröffentlichungstag und Bekanntmachung des Hinweises auf die Patenterteilung: **21.02.2007**
(21) Anmeldenummer: 01956294.1
(22) Anmeldetag: 23.06.2001
(51) Int. Cl.: F02D 41/22

(54) **VERFAHREN UND VORRICHTUNG ZUR ÜBERWACHUNG EINES SENSORS**
METHOD AND DEVICE FOR MONITORING A SENSOR
PROCEDE ET DISPOSITIF DE CONTROLE D'UN DETECTEUR

(30) Priorität: 05.08.2000 DE 10038338
(43) Veröffentlichungstag der Anmeldung: 14.05.2003
(73) Patentinhaber: ROBERT BOSCH GMBH, 70442 Stuttgart (DE)
(72) Erfinder: LANDSCHOFF, Otwin, 70499 Stuttgart (DE)
(86) Internationale Anmeldenummer: PCT/DE2001/002320
(87) Internationale Veröffentlichungsnummer: WO 2002/012697

(56) Entgegenhaltungen:
- EP-A- 0 769 612
- JP-A- 2 245 444
- US-A- 4 498 443
- US-A- 4 844 038
- PATENT ABSTRACTS OF JAPAN vol. 2000, no. 07, 29. September 2000 (2000-09-29) & JP 2000 097099 A (UNISIA JECS CORP), 4. April 2000 (2000-04-04) -& US 6 192 866 B1 (UNISIA CORP.) 27. Februar 2001 (2001-02-27)

## Beschreibung

### Stand der Technik

Die Erfindung betrifft ein Verfahren und eine Vorrichtung zur Überwachung eines Sensors gemäß den Oberbegriffen der unabhängigen Ansprüche.

Ein Verfahren und eine Vorrichtung zur Überwachung eines Sensors, der eine Druckgröße erfasst, die dem Druck der der Brennkraftmaschine zugeführten Luft entspricht, ist aus der DE-40 32 451 A1 bekannt. Dort werden verschiedene Verfahren und Vorgehensweisen zur Überwachung eines Ladedrucksensors beschrieben. Das Ausgangssignal des Ladedrucksensors wird mit einer Referenzgröße verglichen. Als Referenzgröße wird zum einen das Ausgangssignal eines zweiten Ladedrucksensors verwendet. Bei einer weiteren Ausgestaltung wird in bestimmten Betriebszuständen, beispielsweise bei kleinen Lasten und Drehzahlen das Ausgangssignal des Ladedrucksensors mit einem Atmosphärendrucksensor verglichen. In stationären Betriebszuständen wird der gemessene Wert mit einem ausgehend von der Kraftstoffmenge und der Motordrehzahl berechneten Wert verglichen.

Nachteilig bei dieser Vorgehensweise ist, dass zum einen ein weiterer Sensor erforderlich ist oder dass die Überprüfung nur in bestimmten Betriebszuständen vorgenommen werden kann. Werden diese Betriebszustände nur selten erreicht, ergeben sich unter Umständen lange Betriebsphasen mit defektem Ladedrucksensor.

Das PATENT ABSTRACT OF JAPAN Bd. 2000, Nr. 07, 29. September 200 (2000-09-29) & JP 2000 097099 A, 4. April 2000 (2000-04-04) zeigt einen Drucksensor im Luftsystem einer Brennkraftmaschine. Dieser wird als Defekt erkannt, wenn nach Betätigen des Zündschalters das Signal des Drucksensors innerhalb einer bestimmten Wartezeit nicht ändert. Diese Änderung wird ausgehend von der Differenz zwischen dem Drucksensor und einem Atmosphären Drucksensors ermittelt. Nachteilig bei diesem Verfahren ist es, dass dieses Verfahren nur beim Start der Brennkraftmaschine durchgeführt wird. Ein fehlerhafter Sensor kann aber auch im normalen Betrieb der Brennkraftmaschine spontan auftreten. Ein entsprechender Defekt kann mit diesem Verfahren nicht sicher erkannt werden, da lediglich überprüft, ob beim Start nach Überstreiten einer Drehzahlschwelle und Ablauf einer Wartezeit sich das Drucksignal ändert. Eine Berücksichtigung der Kraftstoffmenge oder einer die Kraftstoffmenge charakterisierenden Größe kann der Fachmann dieser Entgegenhaltung nicht entnehmen. Die Kraftstoffmenge bzw. eine Betriebskenngröße, die die Kraftstoffmenge charakterisiert, wird in dem gesamten Dokument nicht erwähnt. Nach der JP-02 245 444 wird ein fehlerhafter Drucksensor erkannt, wenn sein Signal nicht dem eines Drusselklappensensors folgt.

### Vorteile der Erfindung

Dadurch, dass ein Fehler erkannt wird, wenn eine Änderung einer Betriebskenngröße, die die eingespritzte Kraftstoffmenge charakterisiert, keine entsprechende Änderung der Ausgangsgröße des Sensors zur Folge hat, ist eine sichere Erkennung, insbesondere auch im dynamischen Betrieb der Brennkraftmaschine, möglich. Als Betriebskenngröße, die die einzuspritzende Kraftstoffmenge charakterisiert können verschiedene Größen Verwendung finden. Es werden erfindungsgemäss eingesetzt : Momentengrößen, wie beispielsweise das Wunschmoment, Ansteuersignale für Mengenstellglieder oder Kraftstoffmengen, die in einem Steuergerät für eine Brennkraftmaschine vorliegen. Besonders vorteilhaft ist die Verwendung der erfindungsgemäßen Vorgehensweise bei einem Ladedrucksensor, der den Druck der Luft erfasst, die der Brennkraftmaschine zugeführt wird. Die Vorgehensweise kann aber auch bei anderen Sensoren eingesetzt werde.

Bestimmte Fehler, wie beispielsweise ein Vereisen eines Sensors treten nur bei bestimmten Betriebszuständen auf, daher ist es vorteilhaft, wenn die Überwachung des Sensors abhängig vom Vorliegen bestimmter Betriebszustände erfolgt.

Ein Vereisen des Sensors tritt nur in bestimmten Temperaturbereichen der Lufttemperatur auf. Die Überwachung erfolgt, wenn eine Größe, die die Lufttemperatur charakterisiert kleiner als ein Schwellenwert ist.

Eine Überwachung ist nur sicher und/oder mit großer Genauigkeit möglich, wenn bestimmte Drehzahlwerte und/oder Kraftstoffmengenwerte vorliegen. Die Überwachung erfolgt, wenn bestimmte Werte für die Drehzahl und/oder die eingespritzte Kraftstoffmenge vorliegen.

Besonders vorteilhaft ist es, wenn bei einem erkannten Fehler ein Ersatzwert verwendet wird. Ein besonders einfach zu berechnender Ersatzwert ergibt sich aus der Drehzahl und der einzuspritzenden Kraftstoffmenge. Durch die Verwendung des Ersatzwertes ist auch im Fehlerfall ein weiterer Betrieb der Brennkraftmaschine möglich, wobei die Genauigkeit der Steuerung der Brennkraftmaschine nur unwesentlich beeinträchtigt wird.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockdiagramm des Systems zur Erfassung des Ladedrucks, Figur 2 eine detaillierte Darstellung der Überwachung des Ladedrucks und Figur 3 ein Blockdiagramm zur Darstellung der Bildung eines Ersatzwertes für den Ladedruck.

### Beschreibung der Ausführungsbeispiele

Im Folgenden wird die erfindungsgemäße Vorgehensweise am Beispiel eines Ladedrucksensors beschrieben. Die Erfindung ist aber nicht auf diese Anwendung beschränkt. Die erfindungsgemäße Vorgehensweise kann bei allen Sensoren eingesetzt werden, bei denen eine Änderung einer Betriebskenngröße eine entsprechende Änderung des Ausgangssignals des Sensors zur Folge hat. Insbesondere kann die erfindungsgemäße Vorgehensweise auch bei einem Sensor zur Erfassung der Luftmenge oder einer mit dem Ladedruck korrelierten Größe oder einer den Ladedruck charakterisierenden Größe verwendet werden. Insbesondere kann die Vorgehensweise auch bei einem Sensor zur Erfassung der Luftmenge eingesetzt werden.

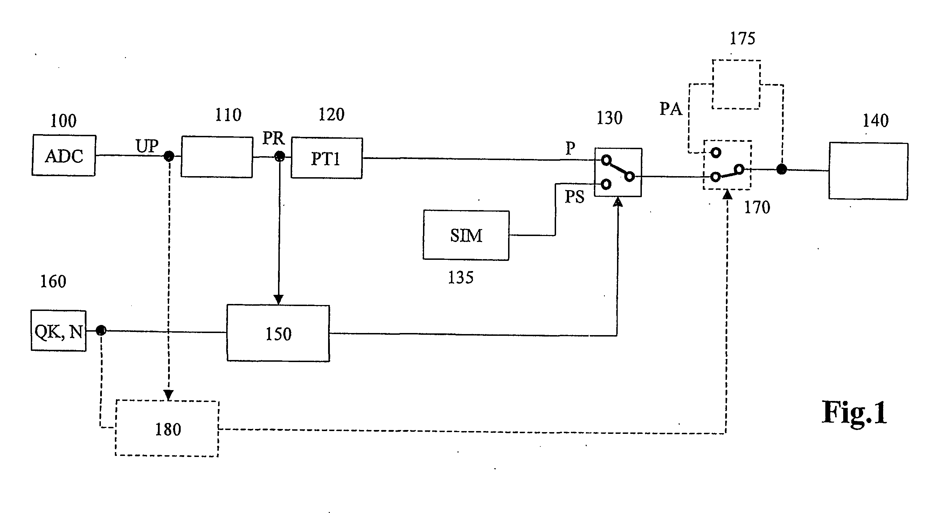

In Figur 1 ist ein Sensor zur Erfassung des Ladedrucks und der dazugehörige Analog/Digitalwandler mit 100 bezeichnet. Dieser liefert ein Signal UP, das dem Ladedruck entspricht, an eine Kennlinie 110. Dort wird diese Größe in ein Signal PR umgewandelt, dass wiederum einem Filter 120 zugeleitet wird. Das Ausgangssignal P des Filters 120 gelangt über ein erstes Schaltmittel 130 zu einer Steuerung 140, die dieses Signal dann weiterverarbeitet, um die Brennkraftmaschine oder an der Brennkraftmaschine angeordnete Steller entsprechend anzusteuern.

Am zweiten Eingang des ersten Schaltmittels 130 liegt ein Ausgangssignal PS einer Simulation 135 an. Diese Simulation 135 berechnet ausgehend von verschiedenen Größen einen simulierten Ladedruck PS.

Das Schaltmittel 130 ist von einer ersten Überwachung 150 ansteuerbar. Dies bedeutet, bei einem erkannten Fehler schaltet die erste Überwachung das erste Schaltmittel 130 in eine solche Position, dass das Ausgangssignal PS der Simulation 135 zur Steuerung 140 gelangt. Die erste Überwachung 150 wertet Signale verschiedener Sensoren 160 aus, die beispielsweise die einzuspritzende Kraftstoffmenge QK und/oder die Drehzahl N der Brennkraftmaschine charakterisieren, Desweiteren wird vorzugsweise das Ausgangssignal PR des Kennfeldes 110 zur Fehlerüberwachung ausgewertet. Alternativ oder ergänzend kann auch das Ausgangssignal P des Filters 120 bzw. das Ausgangssignal UP des A/D-Wandlers des Sensors 100 unmittelbar verarbeitet werden.

Eine weitere Ausgestaltung ist gestrichelt dargestellt. Bei dieser ist zwischen dem ersten Schaltmittel 130 und der Steuerung 140 ein zweites Schaltmittel 170 angeordnet, dass von einer zweiten Überwachung 180 angesteuert wird. Im Fehlerfall steuert die zweite Überwachung 180 das Schaltmittel 170 so an, dass das Ausgangssignal PA einer Verzögerung 175 zur Steuerung 140 gelangt. Diese bewirkt, dass bei einer Erkennung eines Defekts, der zuletzt als fehlerfrei erkannte Werte beibehalten wird.

Das Ausgangssignal des Sensors, das von einem A/D-Wandler bereitgestellt wird, wird von der Kennlinie 110 in eine Größe PR umgewandelt, die dem Druck entspricht. Nach Auswerten der verschiedenen Signale durch die erste Überwachung und/oder die zweite Überwachung werden verschiedene Fehler erkannt.

Durch eine entsprechende Ansteuerung des ersten Schaltmittels 130 und/oder des zweiten Schaltmittels 170 kann ein Ersatzwert PS oder ein früher abgespeicherter Wert PA als Ersatzwert bei einem erkannten Fehler zur Steuerung der Brennkraftmaschine durch die Steuerung 140 verwendet werden. Hierzu speichert die Verzögerung 175 den zuletzt als fehlerfrei erkannten Wert ab. Dieser in der Verzögerung 175 abgespeicherte alte Wert PA dient dann zur Steuerung der Brennkraftmaschine.

Durch die erste Überwachung und/oder die zweite Überwachung können verschiedene Fehler erkannt werden. So kann beispielsweise ein Signal-Range-Check auf einem minimalen und/oder einem maximalen Wert für das Signal UP bzw. das Signal PR vorgesehen sein. Desweiteren kann eine Plausibilitätsüberprüfung mit einem weiteren Sensor wie einem Atmosphärendrucksensor in bestimmten Betriebsbedingungen durchgeführt werden.

Desweiteren kann erfindungsgemäß vorgesehen sein, dass eine Plausibilitätsprüfung mit der Einspritzmenge und/oder einer anderen Betriebskenngröße, die einen wesentlichen Einfluss auf den Ladedruck besitzt, durchgeführt wird. Diese Plausibilitätsprüfung erfolgt vorzugsweise derart, dass ein Fehler erkannt wird, wenn eine Änderung der Betriebskenngröße keine entsprechende Änderung der Ausgangsgröße des Sensors zur Folge hat.

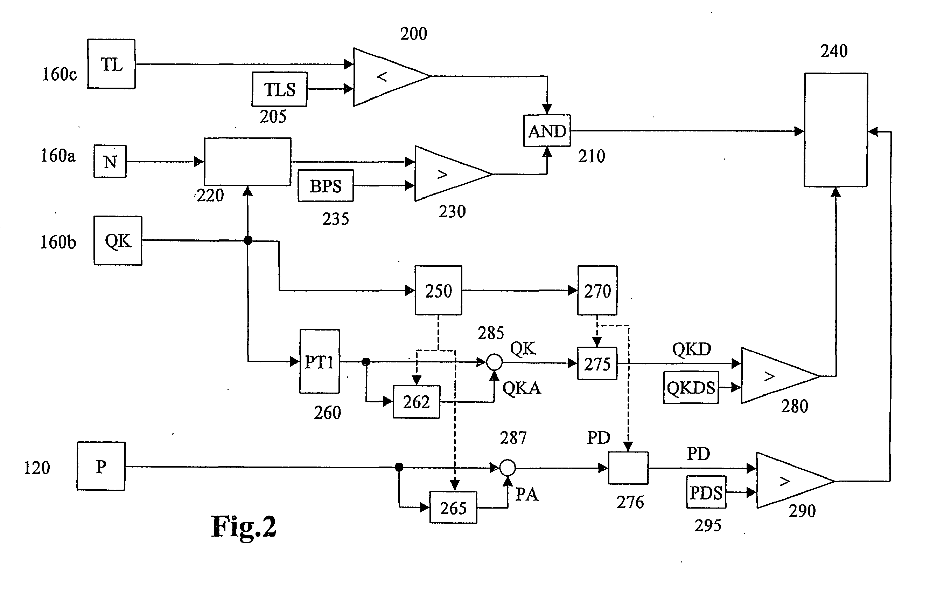

Vorzugsweise wird als Betriebskenngröße eine Größe verwendet, die die eingespritzte Kraftstoffmenge charakterisiert. Hierzu kann zum einen ein Sollwert für die einzuspritzende Kraftstoffmenge und/oder eine Stellgröße, die zur Ansteuerung eines kraftstoffbestimmenden Stellgliedes verwendet wird, eingesetzt werden. Beispielsweise eignet sich die Ansteuerdauer eines elektromagnetischen Ventils oder eines Piezoaktuators. Diese Überwachung ist detaillierter in der Figur 2 dargestellt.

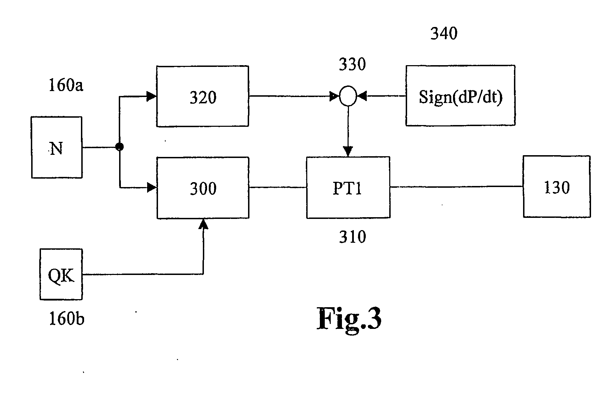

Wird ein entsprechender Fehler erkannt, so schaltet die erste Umschaltung 130 auf das simulierte Ersatzsignal PS um. Dies bedeutet, dass die Funktionsfähigkeit des Sensors überwacht und bei einem Defekt das Ersatzsignal PS verwendet wird. Zur Ermittlung des Ersatzsignals werden Größen, die den Betriebszustand der Brennkraftmaschine charakterisieren, verwendet. Der so gebildete Wert wird zusätzlich mit einem Filter, der eine verzögernde Komponente aufweist, gefiltert. Eine detaillierte Darstellung der Bildung des Ersatzwertes findet sich in Figur 3.

Die erste Überwachung 150 ist beispielhaft detaillierter in Figur 2 dargestellt. In bestimmten Betriebszuständen kann der Fall eintreten, dass der Ladedruckwert UP konstant bleibt, obwohl der tatsächliche Ladedruck sich ändert. Ein solcher Fehler wird auch als Einfrieren oder Vereisen des Sensors bezeichnet. Zur Erkennung dieses Fehlers, wird die in Figur 2 dargestellte Fehlerüberwachung durchgeführt.

Die Überwachung erfolgt erfindungsgemäß nur in bestimmten Betriebszuständen. Liegt ein solcher Betriebszustand vor, bei dem die Ladelufttemperatur unterhalb eines Schwellwertes TLS liegt, und die Drehzahl und die einzuspritzende Kraftstoffmenge liegen innerhalb bestimmter Wertebereiche, so werden nach einem Vorzeichenwechsel bei der Änderung der einzuspritzenden Kraftstoffmenge die aktuell vorliegende Menge und der aktuell vorliegende Ladedruck als alte Werte QKA bzw. PA abgespeichert. Gleichzeitig startet ein Zeitzähler. Nach Ablauf einer Wartezeit werden die Differenzen QKD zwischen dem alten abgespeicherten Wert QKA und dem nun aktuellen Wert QK der Einspritzmenge gebildet. Entsprechend wird auch die Änderung PD des Drucks in dieser Wartezeit bestimmt.

Ist der Betrag der Differenz zwischen den Kraftstoffmengenwerten größer als ein Schwellwert QKDS, so muss auch der Betrag der Änderung des Ladedrucks größer als ein Schwellwert PDS sein. Ist dies nicht der Fall, so wird ein Fehler erkannt.

In Figur 2 ist eine Ausführungsform einer solchen Überwachungseinrichtung beispielhaft dargestellt. Einem ersten Vergleicher 200 wird das Ausgangssignal TL eines Temperatursensors 160c, der ein Signal bereitstellt, dass der Ladelufttemperatur entspricht, zugeführt. Desweiteren wird dem Vergleicher 200 von einer Schwellwertvorgabe 205 ein Schwellwert TLS zugeleitet. Der Vergleicher 200 beaufschlagt ein UND-Glied 210 mit einem entsprechenden Signal. Einem zweiten Vergleicher 230 wird das Ausgangssignal eines Kennfeldes 220 zugeleitet, an dessen Eingang das Drehzahlsignal N eines Drehzahlsensors 160a anliegt. Ferner verarbeitet das Kennfeld 220 eine Größe QK, die die einzuspritzende Kraftstoffmenge charakterisiert und die Vorzugsweise von einer Mengensteuerung 160b bereitgestellt wird. Desweiteren wird dem Vergleicher 230 von einer Schwellwertvorgabe 235 ein Schwellwert BPS zugeleitet. Der Vergleicher 230 beaufschlagt ebenfalls das UND-Glied 210 mit einem entsprechenden Signal.

Die Größe QK gelangt ferner zu einer Vorzeichenerkennung 250 und einem Filter 260. Mit dem Ausgangssignal der Vorzeichenerkennung 250 wird eine Zeitzähler 270 sowie ein erster Speicher 262 und ein zweiter Speicher 265 beaufschlagt.

Das Ausgangssignal des Filters 260 gelangt zum einen direkt mit positivem Vorzeichen zu einem Verknüpfungspunkt 285 und zum anderen über den ersten Speicher 262 mit negativem Vorzeichen an den zweiten Eingang des Verknüpfungspunktes 285. Der Verknüpfungspunkt 285 beaufschlagt ein Schaltmittel 275 mit einer Größe QKD. Das Ausgangssignal des Schaltmittels 275 QKD gelangt zu einem dritten Vergleicher 280, an dessen zweiten Eingang das Ausgangssignal QKDS einer Schwellwertvorgabe 285 anliegt. Mit dem Ausgangssignal des Vergleichers 280 wird ebenfalls die Auswertung 240 beaufschlagt.

Das Ausgangssignal P des Filters 120 gelangt zum einen direkt mit positivem Vorzeichen zu einem Verknüpfungspunkt 287 und zum anderen über den zweiten Speicher 265 mit negativem Vorzeichen an den zweiten Eingang des Verknüpfungspunktes 287. Der Verknüpfungspunkt 287 beaufschlagt ein Schaltmittel 276 mit einer Größe PD. Das Ausgangssignal des Schaltmittels 276 PD gelangt zu einem vierten Vergleicher 290, an dessen zweiten Eingang das Ausgangssignal PDS einer Schwellwertvorgabe 295 anliegt. Mit dem Ausgangssignal des Vergleichers 290 wird ebenfalls die Auswertung 240 beaufschlagt.

Der erste Vergleicher 200 vergleicht die gemessene Ladelufttemperatur TL mit dem Schwellwert TLS. Ist die gemessene Ladelufttemperatur TL kleiner als der Schwellwert TLS, gelangt ein entsprechendes Signal an das UND-Glied 210. Das Kennfeld 220 bildet ausgehend von wenigstens der Drehzahl und/oder der einzuspritzenden Kraftstoffmenge einen Kennwert, der den Betriebszustand der Brennkraftmaschine charakterisiert. Dieser Kennwert wird in dem Vergleicher 230 mit dem Schwellenwert BTS verglichen. Ist der Kennwert für den Betriebszustand größer als der Schwellenwert BPS, so geht ein entsprechendes Signal an das UND-Glied 210. Sind beide Bedingungen erfüllt, d. h. ist die Temperatur der Luft kleiner als der Schwellwert TLS und liegen bestimmte Betriebszustände vor, so ist eine Überwachung möglich.

Diese Logikeinheit bestehend aus den Vergleichern 200 und 230, den Schwellwertvorgaben 205 und 235, dem Kennfeld 220 und dem UND-Glied, bewirken, dass die Überwachung des Sensorsignals abhängig vom Vorliegen bestimmter Betriebszustände erfolgt. Die Überwachung erfolgt nur, wenn die Lufttemperatur kleiner als ein Schwellenwert ist und wenn bestimmte Werte für die Drehzahl und/oder die eingespritzte Kraftstoffmenge vorliegen.

Von der Vorzeichenerkennung 250 wird überprüft, ob eine Änderung des Vorzeichens der Änderung der Kraftstoffmenge vorliegt. Dies bedeutet, es wird überprüft, ob die Ableitung über der Zeit der einzuspritzenden Kraftstoffmenge einen Nulldurchgang besitzt. Ist dies der Fall, so werden in dem Speicher 262 die aktuellen Werte der einzuspritzenden Kraftstoffmenge als alter Wert QKA abgelegt. Entsprechend wird in dem zweiten Speicher 265 der aktuelle Wert des Druckes als alter Wert PA abgelegt. Besonders vorteilhaft ist hierbei, wenn die einzuspritzende Kraftstoffmenge vor dem Abspeichern mittels des Filters 260 gefiltert wird.

Gleichzeitig mit dem erkannten Vorzeichenwechsel wird der Zeitzähler 270 aktiviert. Ausgehend von dem aktuellen Wert QK und dem alten Wert QKA für die Kraftstoffmenge wird ein Differenzwert QKD im Verknüpfungspunkt 285 gebildet, der die Änderung der Kraftstoffmenge seit dem letzten Vorzeichenwechsel angibt. Entsprechend wird im Verknüpfungspunkt 287 ein entsprechender Differenzwert PD für den Druck gebildet, der der Änderung des Ladedrucks seit dem letzten Vorzeichenwechsel charakterisiert.

Ist der Zeitzähler abgelaufen, d. h. eine bestimmte Wartezeit seit dem letzten Vorzeichenwechsel ist erfüllt, so wird das Differenzsignal QKD von dem Vergleicher 280 mit einem Schwellenwert QKDS verglichen. Entsprechend wird der Differenzdruck PD mit einem entsprechenden Schwellwert PDS in dem Verknüpfungspunkt 290 verglichen. Sind die beiden Werte für die Differenz der Kraftstoffmenge QKD und den Differenzdruck PD jeweils größer als der Schwellwert, so erkennt die Einrichtung nicht auf Fehler. Ist lediglich die Differenz der Kraftstoffmenge QKD größer als der Schwel-lwert und der Wert PD für den Druck ist kleiner als der Schwellwert PDS, so erkennt die Einrichtung auf Fehler. In diesem Fall wird von der Überwachung 150, d. h. von der Auswertung 240 ein entsprechendes Signal zur Ansteuerung der Umschaltung 130 vorgegeben.

Bei der hier dargestellten Vorgehensweise handelt es sich um eine Ausführungsform. Es sind auch andere Ausführungsformen möglich, so kann die Überprüfung auch mittels anderer Programmschritte erfolgen. Wesentlich ist, dass ein Fehler erkannt wird, wenn eine Änderung einer Betriebskenngröße, wie beispielsweise der einzuspritzenden Kraftstoffmenge, keine entsprechende Änderung des Ladedrucks zur Folge hat. Ist nach einem Vorzeichenwechsel der Änderung der Kraftstoffmenge eine Änderung der Kraftstoffmenge mit einer Änderung der Druckgrösse korreliert, so liegt kein Fehler vor.

Anstelle der Kraftstoffmenge können auch andere Größen verwendet werden, die die einzuspritzende Kraftstoffmenge charakterisieren, das heisst von der Kraftstoffmenge abhängen oder abhängig von der die Kraftstoffmenge bestimmt wird. So kann beispielsweise eine Lastgröße, eine Momentengröße und/oder ein Ansteuergröße eines Mengenstellers verwendet werden.

In Figur 3 ist die Simulation 135 detaillierter dargestellt. Bereits in Figur 1 beschriebene Elemente sind mit entsprechenden Vorzeichen bezeichnet. Das Signal N des Drehzahlsensors 160a und das Signal QK bezüglich der eingespritzten Kraftstoffmenge gelangen zu einem Kennfeld 300, dessen Ausgangsgröße gelangt über einen Filter 310 zu dem Schaltmittel 130. Die Drehzahl N gelangt über eine Kennlinie 320 und einen Verknüpfungspunkt 330 ebenfalls zu dem Filter 310. Am zweiten Eingang des Verknüpfungspunktes 330 liegt das Ausgangssignal einer Vorzeichenermittlung 340 an.

In dem Kennfeld 300 ist abhängig vom Betriebszustand der Brennkraftmaschine ein Wert für den Ladedruck P abgelegt.

Dieser abgespeicherte Wert entspricht dem Ladedruck im statischen Zustand. Um dynamische Zustände berücksichtigen zu können, ist das Filtermittel 310 vorgesehen. Dieses Filtermittel 310 ist vorzugsweise als PT1-Filter ausgebildet, und bildet den zeitlichen Verlauf des Drucks bei einer Änderung des Betriebszustandes nach. Besonders vorteilhaft ist es, wenn das Übertragungsverhalten dieses Filtermittels abhängig vom Betriebszustand der Brennkraftmaschine variierbar ist. Hierzu ist insbesondere die Kennlinie 320 vorgesehen, in der abhängig von wenigstens der Drehzahl N eine Größe abgelegt ist, die das Übertragungsverhalten des Filtermittels 310 bestimmt, in dem es die Zeitkonstante des Filtermittels wichtet.

Desweiteren wird das Übertragungsverhalten von der Vorzeichenermittlung bestimmt, die abhängig vom Vorzeichen der Druckänderung eine Korrekturgröße zur Korrektur des Ausgangssignals des Kennfeldes 320 vorgibt. Die Vorzeichenermittlung ermittelt, ob der Druck ansteigt bzw. abfällt. Als Eingangsgröße für die Vorzeichenermittlung wird vorzugsweise das Ausgangssignal des Kennfeldes 300 verwendet. Besonders vorteilhaft ist es, wenn zwei Kennlinien 320 vorgesehen sind, wobei abhängig davon, ob der Druck ansteigt oder abfällt die eine oder die andere Kennlinie verwendet wird.

## Patentansprüche

1. Verfahren zur Überwachung eines Sensors zur Erfassung einer Druckgröße, die den Druck der einer Brennkraftmaschine zugeführten Luft charakterisiert, **dadurch gekennzeichnet, dass** ein Fehler erkannt wird, wenn eine Änderung einer Kraftstoffmenge, einer Momentengröße oder ein Ansteuergröße eines Mengenstellers keine entsprechende Änderung der Ausgangsgröße des Sensors zur Folge hat.

2. Verfahren nach Anspruch 1, **dadurch gekennzeichnet, dass** die Überwachung des Sensors abhängig vom Vorliegen bestimmter Betriebszustände erfolgt.

3. Verfahren nach einem der vorherigen Ansprüche, **dadurch gekennzeichnet, dass** die Überwachung erfolgt, wenn eine Größe, die die Lufttemperatur charakterisiert kleiner als ein Schwellenwert ist.

4. Verfahren nach einem der vorherigen Ansprüche, **dadurch gekennzeichnet, dass** die Überwachung erfolgt, wenn bestimmte Werte für die Drehzahl und/oder die eingespritzte Kraftstoffmenge vorliegen.

5. Verfahren nach einem der vorherigen Ansprüche, **dadurch gekennzeichnet, dass** nach einem Vorzeichenwechsel der Änderung der Kraftstoffmenge eine Änderung der Kraftstoffmenge mit einer Änderung der Druckgröße korreliert ist.

6. Verfahren nach einem der vorherigen Ansprüche, **dadurch gekennzeichnet, dass** eine Zeitdauer nach dem Vorzeichenwechsel der Änderung der Kraftstoffmenge der aktuelle Wert der Kraftstoffmenge mit dem Wert der Kraftstoffmenge zum Zeitpunkt des Vorzeichenwechsels verglichen wird.

7. Verfahren nach einem der vorherigen Ansprüche, **dadurch gekennzeichnet, dass** bei einem erkannten Fehler ein Ersatzwert zur Steuerung verwendet wird.

8. Verfahren nach einem der vorherigen Ansprüche, **dadurch gekennzeichnet, dass** der Ersatzwert ausgehend von der Drehzahl und/oder der einzuspritzenden Kraftstoffmenge bestimmt wird.

9. Vorrichtung zur Überwachung eines Sensors einer Brennkraftmaschine, insbesondere eines Sensors zur Erfassung einer Druckgröße, die den Druck der der Brennkraftmaschine zugeführten Luft charakterisiert, **dadurch gekennzeichnet, dass** Mittel vorgesehen sind, die einen Fehler erkennen, wenn eine Änderung einer Kraftstoffmenge, einer Momentengröße oder ein Ansteuergröße eines Mengenstellers keine entsprechende Änderung der Ausgangsgröße des Sensors zur Folge hat.

## Claims

1. Method for monitoring a sensor for detecting a pressure variable which characterizes the pressure of the air fed to an internal combustion engine, **characterized in that** a fault is detected if a change in a fuel quantity, in a torque variable or an actuation variable of a quantity adjuster does not result in any corresponding change in the output variable of the sensor.

2. Method according to Claim 1, **characterized in that** the sensor is monitored as a function of the presence of specific operating states.

3. Method according to one of the preceding claims, **characterized in that** the monitoring takes place if a variable which characterizes the air temperature is smaller than a threshold value.

4. Method according to one of the preceding claims, **characterized in that** the monitoring takes place if specific values for the rotational speed and/or the injected fuel quantity are present.

5. Method according to one of the preceding claims, **characterized in that** after a change of sign in the change of the fuel quantity a change in the fuel quantity is correlated to a change in the pressure variable.

6. Method according to one of the preceding claims, **characterized in that** a period after the change in sign in the change of the fuel quantity the current value of the fuel quantity is compared with the value of the fuel quantity at the time of the change in sign.

7. Method according to one of the preceding claims, **characterized in that** when a fault is detected an equivalent value is used for the control process.

8. Method according to one of the preceding claims, **characterized in that** the equivalent value is determined on the basis of the rotational speed and/or the fuel quantity to be injected.

9. Device for monitoring a sensor of an internal combustion engine, in particular of a sensor for detecting a pressure variable which characterizes the pressure of the air which is supplied to the internal combustion engine, **characterized in that** means are provided which detect a fault if a change in a fuel quantity, in a torque variable or an actuation variable of a quantity adjuster does not result in any corresponding change in the output variable of the sensor.

## Revendications

1. Procédé de surveillance d'un capteur pour détecter une grandeur de pression qui définit la pression de l'air alimentant un moteur à combustion interne,
**caractérisé en ce qu'**
on reconnaît un défaut si une modification d'une quantité de carburant, d'une grandeur de couple ou d'une grandeur de commande d'un régulateur de débit n'est pas suivie d'une modification de la grandeur de sortie du capteur.

2. Procédé selon la revendication 1,
**caractérisé en ce que**
la surveillance du capteur s'effectue en fonction de la présence d'états de fonctionnement déterminés.

3. Procédé selon l'une quelconque des revendications précédentes,
**caractérisé en ce que**
la surveillance s'effectue si une grandeur caractérisant la température de l'air est inférieure à une valeur de seuil.

4. Procédé selon l'une quelconque des revendications précédentes,
**caractérisé en ce que**
la surveillance s'effectue en présence de valeurs déterminées pour la vitesse de rotation et/ou pour la quantité de carburant injectée.

5. Procédé selon l'une quelconque des revendications précédentes,
**caractérisé en ce qu'**
après un changement de signe de la modification de la quantité de carburant, une modification de la quantité de carburant est corrélée avec une modification de la grandeur de pression.

6. Procédé selon l'une quelconque des revendications précédentes,
**caractérisé en ce qu'**
un certain temps après le changement de signe de la modification de la quantité de carburant, on compare la valeur actuelle de la quantité de carburant avec la valeur de la quantité de carburant au moment du changement de signe.

7. Procédé selon l'une quelconque des revendications précédentes,
**caractérisé en ce qu'**
on utilise une valeur de remplacement pour la commande si un défaut a été détecté.

8. Procédé selon l'une quelconque des revendications précédentes,
**caractérisé en ce que**
la valeur de remplacement est déterminée à partir de la vitesse de rotation et/ou de la quantité de carburant à injecter.

9. Dispositif de surveillance d'un capteur d'un moteur à combustion interne, en particulier d'un capteur pour détecter une grandeur de pression qui caractérise la pression de l'air amené dans le moteur à combustion interne,
**caractérisé par**
des moyens pour détecter un défaut si une modification d'une quantité de carburant, d'une grandeur de couple ou d'une grandeur de commande d'un régulateur de débit n'est pas suivie d'une modification correspondante de la grandeur de sortie du capteur.
